# EUROPÄISCHE PATENTSCHRIFT

(11) **EP 0 388 874 B1**
(45) Veröffentlichungstag und Bekanntmachung des Hinweises auf die Patenterteilung: **04.05.1994**
(21) Anmeldenummer: 90105199.5
(22) Anmeldetag: 20.03.1990
(51) Int. Cl.: G01B 11/06, G01N 21/41

(54) **Verfahren zur Bestimmung von Brechungsindex und Schichtdicke dünner Schichten**
Method of determination of refraction index and layer thickness of thin layers
Procédé de détermination de l'indice de réfraction et de l'épaisseur de couches minces

(30) Priorität: 21.03.1989 DE 3909144
(43) Veröffentlichungstag der Anmeldung: 26.09.1990
(73) Patentinhaber: BASF Aktiengesellschaft, 67063 Ludwigshafen (DE)
(72) Erfinder: Hickel, Werner, Dr., D-6800 Mannheim 24 (DE); Knoll, Wolfgang, Dr., D-6500 Mainz (DE)

(56) Entgegenhaltungen:
- US-A- 4 625 114
- J. Opt. Soc. Am. B, Band 5, Nr. 7, Juli 1988; B. Rothenhäusler, W. Knoll "Interferometric determination of the complex wave vector of plasmon surface polaritons", Seiten 1401-1405
- IBM Technical Disclosure Bulletin, Band 25, Nr. 1, Juni 1982, G.H. Hewig, K. Jain "In-situ, real-time thin-film refractive index and thickness monitor", Seiten 436-438

## Beschreibung

Die Erfindung betrifft ein Verfahren zur Bestimmung von Brechungsindex und Schichtdicke ultradünner Schichten.

Mit der bisher bekannten Methode der Oberflächen-Plasmonen-Spektroskopie war die Bestimmung von Brechungsindex oder Dicke einer ultradünnen Schicht nur mit einer Lateralauflösung von ≧ 0,5 x 0,5 mm² möglich.

Oberflächen-Plasmonen (= PSP) sind gebundene, strahlungslose elektromagnetische Wellen, die durch Polarisationsladungen auftreten, die sich entlang einer Metall/Dielektrikum-Grenzfläche ausbreiten (vgl. E. Burstein, W.P. Chen, Y.J. Chen and A. Hartstein, J. Vac. Sci. Technol. 11, 1004 (1974)). Ihre Feldstärke weist an der Metalloberfläche ein Maximum auf und fällt exponentiell vertikal zur Grenzfläche sowohl in das Metall als auch in das Dielektrikum hinein ab (vgl. H. Raether, in: Physics of Thin Films (eds. G. Hass, M.H. Francombe and R.W. Hoffmann), Vol. 9, 145 - 261, J. Wiley, New York 1977).

Infolge von Dissipations- und Strahlungsverlusten werden diese Wellen auch entlang ihrer Ausbreitungsrichtung gedämpft (vgl. T. Inagaki, K. Kagani and E.T. Arakawa, Phys. Rev. B24, 3644 (1981) und B. Rothenhäusler, J. Rabe, P. Korpiun und W. Knoll, Surf. Sci. 137, 373 (1984). Das Interesse an den Oberflächen-Plasmonen hat in den letzten Jahren zugenommen, da sie in verschiedenen oberflächenspektroskopischen Untersuchungen an Adsorbaten und Dünnfilmschichten erfolgreich zur Feldverstärkung eingesetzt wurden (vgl. Elektromagnetic Surface Excitation, R.F. Wallis and G. I. Stegeman, eds. Springer, Berlin 1986).

Die PSP können als oberflächenspezifisches Licht angesehen werden (vgl. W. Knoll, B. Rothenhäusler and W. Hickel, SPIE Proceedings, Los Angeles, 1989), deren optische Phänomene denen für ebene elektromagnetische Wellen ähnlich sind: Beugung der PSP durch ein dielektrisches Phasengitter (vgl. B. Rothenhäusler and W. Knoll, Appl. Phys. Letters 51, 783 (1987)), Interferometrie zwischen PSP und Treiberphotonenfeld (vgl. B. Rothenhäusler and W. Knoll, J. Opt. Soc. Am. 85, 1401 (1988)) sowie Oberflächen-Plasmonen-Mikroskopie (vgl. B. Rothenhäusler and W. Knoll, Nature 332, 615 (1988)), sind dafür Beispiele.

Aufgabe der vorliegenden Erfindung ist es, eine Methode aufzuzeigen, um Brechungsindex und/oder Dicke ultradünner Schichten mit einer wesentlich verbesserten Lateralauflösung zu bestimmen.

Erfindungsgemäß gelingt es überraschenderweise, mit Hilfe winkelabhängiger Oberflächen-Plasmonen-Mikroskopie die laterale Auflösung auf ≧ 5 x 5 µm² zu verbessern.

Gegenstand der vorliegenden Erfindung ist ein Verfahren zur Bestimmung von Brechungsindex und/oder Dicke von Schichten mit Schichtdicken < 1 µm, das dadurch gekennzeichnet ist, daß Schichten, die auf einen festen Träger aufgebracht sind, mittels Oberflächen-Plasmonen-Mikroskopie als Funktion des Einfallswinkels des eingestrahlten Laserstrahls aufgezeichnet werden.

Erfindungsgemäß ist es möglich, die Schichtdicke der zu bestimmenden Schichten mit einer vertikalen Auflösung ≧ 0,1 nm bei gleichzeitiger lateraler Auflösung ≧ 5 µm zu bestimmen.

Die zu untersuchenden Schichten sind hierzu vorzugsweise auf eine metallische oder Halbleiterschicht aufgebracht.

Das erfindungsgemäße Verfahren unter Einsatz der SPM ist besonders für das Abbilden kontrastarmer Proben, wie z.B. Lipid-Monoschichten oder speziell strukturierter SiO₂-Aufdampfschichten geeignet.

Zum erfindungsgemäßen Verfahren ist im einzelnen folgendes auszuführen.

Oberflächen-Plasmonen werden mit einer Kopplungsanordnung (vgl. H. Raether, in: Physics of Thin Films (eds. G. Hass, M.H. Francombe and R.W. Hoffmann), Vol. 9, 145 - 261, J. Wiley, New York 1977), wie einer Gitter-, Otto-, Kretschmann-Anordnung, vorzugsweise einer Kretschmann-Anordnung durch monochromatisches paralleles Licht angeregt. Als Lichtquelle wird ein Helium/Neon-Laser bevorzugt. In der Kretschmann-Anordnung wird die Basis-Fläche eines Prismas (z.B. aus Glas BK7) entweder direkt mit einer Metall- oder Halbleiterschicht beschichtet oder es wird ein entsprechend beschichteter Glasobjektträger mit der unbeschichteten Seite mit Immersionsflüssigkeit an das Prisma geklebt. Bevorzugt als Metallschichten sind Silber oder Gold oder ein Schichtsystem aus Chrom und Gold.

Das erfindungsgemäße Verfahren eignet sich außerdem für den Aufbau eines Sensors, bei dem die zu untersuchende Schicht chemisch, physikalischchemisch oder biologisch aktiv ist und ermöglicht die Detektion zeitabhängiger chemischer, biologischer und/oder physikalischer Vorgänge.

Unter chemisch, physikalisch-chemisch bzw. biologisch aktiven Schichten werden im Sinne der Erfindung solche Schichten verstanden, mit denen sich beispielsweise chemische Reaktionen, bzw. spezifische Adsorptionsreaktionen durchführen oder die physikalischen Eigenschaften auf physikalisch-chemischem Wege gezielt beeinflussen lassen.

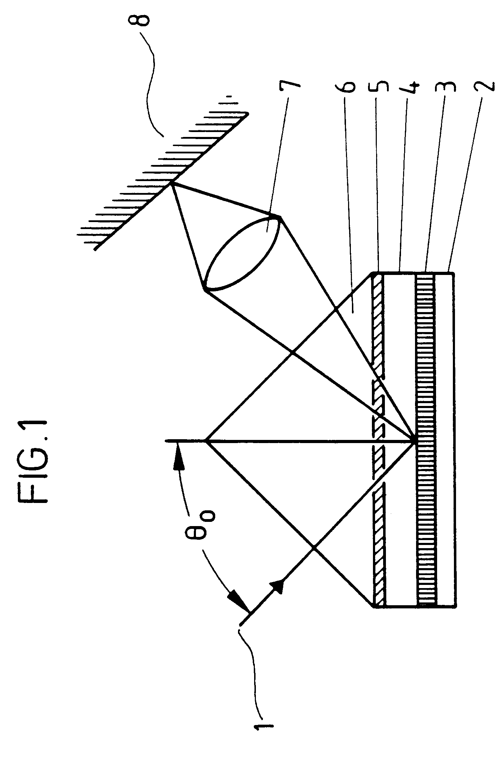

Der Aufbau des erfindungsgemäß eingesetzten Oberflächen-Plasmonen-Mikroskops ist schematisch in Figur 1 dargestellt, worin bedeutet
1 = Lichtquelle; 2 = Probe (Lipidschicht);
3 = Metallschicht; 4 = Glasobjektträger;
5 = Immersionsflüssigkeit; 6 = Glasprisma;
7 = Linse; 8 = Video-Kamera (Bildschirm).

Die zu untersuchenden Schichten werden auf die Metall- oder Halbleiterschicht aufgebracht. Als zu untersuchende Schichten sind beispielsweise solche von Interesse, die nach der Langmuir-Blodgett-Technik, durch Adsorption aus der Flüssigphase (self assembly technik), Aufschleudern (= spin coating) durch Aufdampfen oder Adsorption aus der Gasphase aufgebracht werden können.

Die Langmuir-Blodgett-Technik ist an sich bekannt. Hierzu wird die die zu untersuchende Schicht bildende Substanz in einem organischen, mit Wasser nicht löslichen Lösungsmittel, z.B. Chloroform, gelöst, diese Lösung auf die Wasseroberfläche einer Langmuir-Filmwaage gespreitet und unter Verdunsten des Lösungsmittels eine Monomolekularschicht auf der Wasseroberfläche gebildet. Dieser Oberflächenfilm an der Grenzfläche Luft/Wasser wird dann mittels der beweglichen Barriere der Filmwaage soweit komprimiert, daß eine definierte Schicht aus nur einer Moleküllage entsteht. Diese monomolekulare Schicht wird dann durch Ein- und Austauchen des Trägers bei konstantem Oberflächendruck auf diesen Träger übertragen.

Die nach einer der obengenannten Methoden so präparierte Probe wird mit einem Oberflächen-Plasmonen-Mikroskop (= SPM; vgl. die bereits oben zitierte Veröffentlichung in Nature 332, 615 (1988)) untersucht. Dabei Koppeln die Oberflächen-Plasmonen, die durch die Probe gestreut werden, über das Prisma an Licht, das mit einer Linse gesammelt wird, so daß ein Abbild der Grenzfläche entsteht. Dieses Bild läßt sich mit einer Video-Kamera aufzeichnen und auf ein Magnetband zur späteren Analyse speichern.

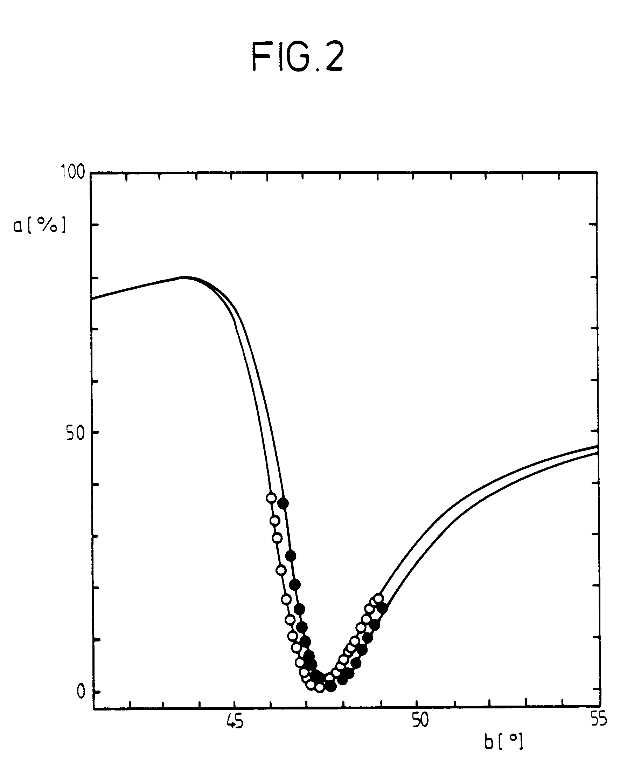

Zur Charakterisierung der dünnen Schichten bezüglich Brechungsindex und Dicke mit Lateralauflösung von 5 x 5 µm² wird das Verfahren der SPM winkelabhängig im Bereich der Plasmonenresonanz durchgeführt. Die SPM-Bilder werden in Abhängigkeit des Einfallswinkels der Lichtquelle (vgl. Fig. 1) auf ein Magnetband aufgezeichnet und/oder mit einem Bildverarbeitungssystem ausgewertet. Dabei wird der mittlere Grauwert einer 5 x 5 µm² entsprechenden Fläche auf dem Bild bestimmt. Dieser Wert entspricht der reflektierten Lichtintensität an dieser Stelle. Durch Normierung auf die maximale Lichtintensität erhält man die relativ reflektierte Intensität. Die so erhaltenen relativen Intensitäten werden gegen den Winkel aufgetragen (vgl. Fig. 2). Mit Hilfe der Fresnel-Theorie (vgl. H. Wolter in Handbuch der Physik (ed. S. Flügge, Springer 56)) werden simulierte Kurven and die gemessenen Kurven angepaßt. Aus dieser Anpassung folgt direkt Dicke oder Brechungsindex der ausgewerteten 5 x 5 µm² großen Fläche.

### Beispiel 1

Dimyristoylphosphatidsäure (= DMPA) (in Chloroform gelöst) wird auf reinem Wasser gespreitet und nach Verdunsten des Lösungsmittels mittels der Langmuir-Blodgett-Technik bei einem Druck von 5 - 6 mN · m⁻¹ (in der Koexistenzphase) auf einen mit 2,5 nm Chrom und 40 nm Gold beschichteten Glasobjektträger übertragen. Es ist bekannt, daß Lipidmonoschichten im Koexistenzbereich quasi zweidimensionale Systeme aus Kristallinen und amorphen Bereichen sind. Es ist zu erwarten, daß sich diese Bereiche hinsichtlich Dicke und Brechungsindex unterscheiden.

Durch winkelabhängige SPM - wie oben beschrieben - können die kristallinen und amorphen Bereiche hinsichtlich Brechungsindex und Dicke erstmals getrennt charakterisiert werden. Das Ergebnis zeigt Figur 2. In Fig. 2 bedeutet a [%] reflektierte Intensität in %; b [°] Einfallswinkel in Grad. Die Resonanzkurve ist, bezogen auf das unbeschichtete Metall, für die amorphen Bereiche (Kreise) weniger verschoben als für die kristallinen Bereiche (Punkte).

Da die Dicke der Monoschicht in den kristallinen Bereichen der kondensierten Phase aus Synchrotron-Röntgenstrahlen-Experimenten (siehe C. Helm, PHD Thesis, München 1988) bekannt war, erhält man für ihren Brechungsindex n₁ = 1,51. Die Dicken der flüssig/amorphen Bereiche sind in der Röntgen-Reflexionsmessung auf der Wasseroberfläche weniger genau definiert, können jedoch auf eine Dicke von 1,55 nm abgeschätzt werden. Man erhält dann als Brechungsindex der amorphen Bereiche n₂ = 1,304. Hierbei handelt es sich um einen überraschend niedrigen Wert, der jedoch mit einem ähnlich niedrigen, durch Röntgenuntersuchungen ermittelten Wert für die Elektronendichte der amorphen Phase vergleichbar ist.

### Beispiel 2

Auf eine Chrom/Goldschicht - wie in Beispiel 1 beschrieben - wird eine über ein Elektronenmikroskopienetz aus Kupfer strukturierte SiO₂-Aufdampfschicht aufgebracht. Die so präparierte Probe wird nach dem erfindungsgemäßen Verfahren untersucht. Der Brechungsindex einer SiO₂-Schicht ist 1,46. In guter Übereinstimmung mit der durch einen Quarz-Schwingkristall beim Aufdampfvorgang bestimmten Dicke ergibt die Anpaßrechnung eine Dicke von 3 nm.

## Patentansprüche

1. Verfahren zur Bestimmung von Brechungsindex und/oder Dicke von Schichten mit Schichtdicken < 1 µm mit einer lateralen Auflösung größer/gleich 5 µm bei gleichzeitiger vertikaler Auflösung von größer/gleich 0,1 nm, in welchem von den Schichten, die auf einem festen Träger aufgebracht sind, mittels Oberflächen-Plasmonen-Mikroskopie als Funktion des Einfallswinkels des eingestrahlten Laserstrahls mit einem geeigneten Bildaufnahmesystem Bilder aufgezeichnet werden.

2. Verfahren nach einem der vorhergehenden Ansprüche, dadurch gekennzeichnet, daß die zu untersuchenden Schichten auf eine metallische oder Halbleiterschicht aufgebracht sind.

3. Verfahren nach einem der vorhergehenden Ansprüche, dadurch gekennzeichnet, daß die zu untersuchende Schicht chemisch, physikalisch-chemisch oder biologisch aktiv ist.

4. Verfahren nach Anspruch 4, dadurch gekennzeichnet, daß die zu untersuchende Schicht für den Aufbau eines zeitabhängigen Sensors eingesetzt wird.

## Claims

1. A method for determining the refractive index and/or thickness of films < 1 µm in thickness with a lateral resolution greater than or equal to 5 µm and a simultaneous vertical resolution greater than or equal to 0.1 nm by using surface plasmon microscopy and a suitable image recording system to record images of the films, which are atop a solid support, as a function of the angle of incidence of the incident laser beam.

2. A method as claimed in claim 1, wherein the films to be examined are atop a metallic or semiconductor film.

3. A method as claimed in either of the preceding claims, wherein the film to be examined is chemically, physico-chemically or biologically active.

4. A method as claimed in claim 3, wherein the film to be examined is used for the construction of a time-dependent sensor.

## Revendications

1. Procédé de détermination de l'indice de réfraction et/ou de l'épaisseur de couches, pour des couches d'épaisseur inférieure < 1 µm, avec une résolution supérieure/égale à 5 µm, avec une résolution verticale simultanée supérieure/égale à 0,1 nm, dans lequel, à l'aide d'un système d'enregistrement d'images approprié, on enregistre des images des couches placées sur un support fixe, au moyen d'une microscopie aux plasmons de surface, en fonction de l'angle d'incidence du rayon laser projeté.

2. Procédé selon l'une des revendications précédentes, caractérisé en ce que les couches à examiner sont appliquées sur une couche métallique ou de semi-conducteur.

3. Procédé selon l'une des revendications précédentes, caractérisé en ce que la couche à examiner est active chimiquement, physiquement-chimiquement, ou biologiquement.

4. Procédé selon la revendication 3, caractérisé en ce que la couche à examiner est utilisée pour construire un capteur à fonction temporelle.
